Europäisches Patentamt

European Patent Office

Office européen des brevets

(1) Publication number: **0 234 634**
**B1**

(12) **EUROPEAN PATENT SPECIFICATION**

(45) Date of publication of patent specification: **07.11.90**

(51) Int. Cl.⁵: **A 01 F 15/00**

(21) Application number: **87200199.5**

(22) Date of filing: **10.02.87**

(54) Bale density control system for round balers.

(30) Priority: **18.02.86 US 830030**

(43) Date of publication of application:
**02.09.87 Bulletin 87/36**

(45) Publication of the grant of the patent:
**07.11.90 Bulletin 90/45**

(84) Designated Contracting States:
**DE FR GB IT**

(56) References cited:
**EP-A-0 130 258**
**EP-A-0 150 629**
**EP-A-0 161 726**
**US-A-4 257 219**

(73) Proprietor: **FORD NEW HOLLAND, INC. (a Delaware corp.)**
**500 Diller Avenue**
**New Holland Pennsylvania 17557 (US)**

(72) Inventor: **Wagstaff, Robert A.**
**2590 Ponderosa Drive**
**Lancaster, PA 17601 (US)**

(74) Representative: **Vandenbroucke, Alberic T.J.**
**FORD NEW HOLLAND N.V. Leon Claeysstraat 3A**
**B-8210 Zedelgem (BE)**

Courier Press, Leamington Spa, England.

## Description

This invention relates generally to roll baling machines, typically referred to as round balers, which form cylindrical roll bales of crop material and, in particular, to a bale density control system for such roll baling machines.

Hydraulic systems have been used on round balers in the past to control bale density. For example, US-A-3.722.197 discloses such a hydraulic system for round balers in which, for controlling the movement of a belt tensioning unit in order to control the density of the formed bales, double acting cylinder assemblies are utilized in combination with the tractor hydraulics of the tractor used to drive the baler during operation. A drawback of the hydraulic system disclosed in US-A-3.722.197 is that it is too complex and too expensive when compared with conventional tension springs which have also been used on round balers for effectively controlling bale density.

EP-A-0.161.726 discloses another hydraulic density control system which also uses double acting hydraulic cylinders of which the operation is controlled by the tractor hydraulics of the tractor used to drive the baler.

US-A-4.257.219 discloses another bale density control system which is of the hydro-pneumatic type and which again is rather complex to the extent that its circuitry comprises means for applying a relative low baling pressure during a first portion of the bale formation and a relative high baling pressure during the remainder of the bale formation.

The present invention provides an extremely simple system for controlling bale density in a round baler and which is particularly useful in combination with a round baler having a frame with arm means mounted thereon and carrying conveying means for forming crop material into roll bales. The arm means are movable between a bale starting position and a full bale position.

According to the present invention, a round baler is provided which includes a frame, arm means mounted on the frame and operatively supporting bale forming conveyor means; said arm means, in operation, being movable in an outward direction from a bale starting position to a full bale position by a roll bale being formed in the baler, and a system for controlling the density of the roll bales formed in the baler; said bale density control system comprising:

hydraulic cylinder means connected between the frame and the arm means in a manner so that movement of the arm means in said outward direction results in pressure fluid draining from the hydraulic cylinder means at one side of the plunger means thereof, and

control means associated with the hydraulic cylinder means and including a control valve in pressure fluid communication with said one side of the hydraulic cylinder means; the arrangement being such that pressure fluid is permitted to drain from said one side of the hydraulic cylinder means only when the pressure therein reaches a preselected level whereby, during bale formation, the movement of the arm means in said outward direction is restrained to thereby induce desired density into a bale being formed in the baler,

and which is characterized in that:

the bale density control system is self-contained and further also comprises:

a reservoir for containing hydraulic pressure fluid; said reservoir being mounted on the frame and connected via said control valve to said one side of the hydraulic cylinder means; and

a one way check valve mounted in parallel with the control valve in a manner to permit pressure fluid flow from the reservoir to said one side of the hydraulic cylinder means, the arrangement being such that, upon the discharge of a completed bale from the baler, the arm means are permitted to return from said full bale position to said bale starting position under influence of gravity forces acting thereupon.

A preferred embodiment of a bale density control system for round balers in accordance with the present invention will now be described in greater detail, by way of example, with reference to the accompanying drawings in which:

Fig. 1 is a schematic side elevational view of a round baler incorporating the bale density control system of the present invention; and

Fig. 2 is a schematic view of the bale density control system of the present invention.

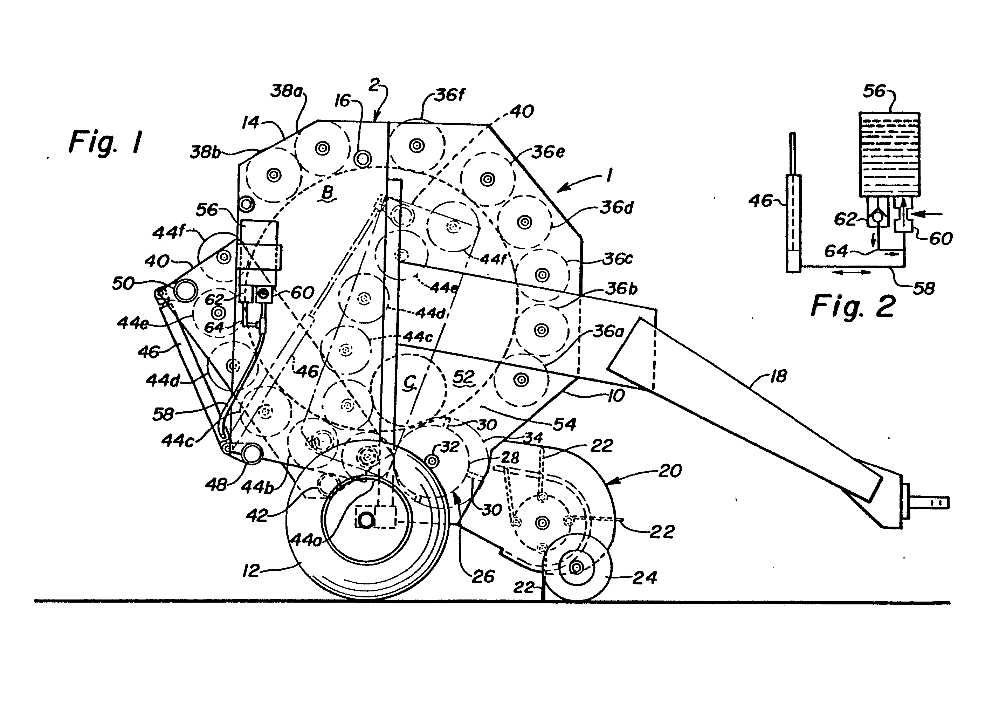

Referring to Fig. 1, a round baler 1 includes a frame 2 consisting of a base frame portion 10 supported by a pair of wheels 12 and an auxiliary frame portion or tailgate 14 pivotally connected to the base frame portion 10 by stub shafts 16 mounted in suitable bearings. A tongue 18 is provided on the forward end of the base frame portion 10 for connection to a towing vehicle such as a tractor (not shown). A pickup 20 is attached to the base frame portion 10 and includes a series of fingers 22 movable in a path to lift crop material from the ground. The pickup 20 is supported by a wheel 24. A feeder drum 26 is rotatably mounted on the base frame portion 10 and includes a cylinder 28 and a plurality of fingers 30 mounted on a shaft (not shown) that is offset relative to the shaft 32 on which the cylinder 28 is mounted. As the cylinder 28 is rotated on the shaft 32, the fingers 30 reciprocate through openings in the cylinder 28 so that the tips of the fingers 30 follow a path designated 34.

The round baler 1 includes a set of conveying members or rollers 36a through 36f fixedly journalled in bearings mounted in the sidewalls of the base frame portion 10. Another set of conveying members or rollers 38a and 38b is fixedly journalled in bearings mounted in sidewalls of the tailgate 14. A pair of arms 40 are pivoted at one end on stub shafts 42 mounted in the tailgate 14. A further set of conveying members or rollers 44a through 44f is rotatably carried by the arms 40. A hydraulic cylinder unit 46 is pivoted at its lower end to a beam 48 extending between the sidewalls of the tailgate 14 and at its upper end to

2

a beam 50 connected between the arms 40. The sets of rollers 36a-36f, 38a-38b and 44a-44f constitute a mechanism for forming crop material into roll bales. Other aspects of the round baler 1 such as the drive system therefore will be understood from the commonly assigned EP-A-0.161.726 which is incorporated herein by reference.

When the round baler 1 is empty, the arms 40 are in a bale starting position shown in phantom in Fig. 1 so that the rollers 44a through 44f carried thereon cooperate with the feeder drum 26 and with the rollers 36a through 36d to define a bale starting chamber 52 which is elongated in a generally vertical direction. The roller 36a is spaced from the feeder drum 26 a sufficient distance to provide an inlet 54 to the bale starting chamber 52. The pickup 20 and the feeder drum 26 deliver crop material into the bale starting chamber 52 through the inlet 54 to form the core C of a roll bale. As the core C increases in diameter, the arms 40 are moved toward a full bale position shown in full lines in Fig. 1. When a full bale B has been formed, the tailgate 14 is pivoted upwardly on the stub shafts 16 and bale B is discharged. Subsequently, the tailgate 14 is returned to the closed position of Fig. 1 and the arms 40 return to their bale starting position so that the baler 1 is ready to form another bale.

The bale density control system according to the present invention includes the hydraulic cylinder unit 46 which is of the single acting type and a reservoir 56 containing hydraulic fluid. The cylinder unit 46 is connected through a conduit 58 and a control valve 60 to the reservoir 56. The control valve 60 is preferably adjustable in order to permit fluid passage from the cylinder unit 46 to the reservoir 56 only when the hydraulic fluid pressure in the cylinder unit 46 reaches a preselected level. The control valve 60 therefore preferably is in the form of an adjustable relief valve mounted so as to permit a fluid flow only in said direction from the cylinder unit 46 to the reservoir 56 and on condition that the fluid pressure in the hydraulic cylinder unit 46 reaches said preselected level. In other words, pressure fluid cannot flow in the opposite direction from the reservoir 56 via the control valve 60 into the cylinder unit. The reservoir 56 is also connected through a check valve 62, a conduit 64 and the conduit 58 to the cylinder unit 46. The check valve 62 is of the one way type and is provided in parallel with the control valve 60 in a manner so as to permit fluid passage from the reservoir 56 through the conduits 64 and 58 into the cylinder unit 46 on the one hand and to prevent fluid passage through the conduit 64 into the reservoir 56 on the other hand.

It will be understood that when the round baler 1 is empty and when the arms 40 are in their bale starting position shown in phantom in Fig. 1, the cylinder unit 46 is fully extended whereby the cylinder unit 46 is filled with hydraulic fluid and holds the arms 40 in their bale starting position as crop material is fed into the bale starting chamber 52 to form the core C of a roll bale. As the core C increases in diameter, this "growing" bale urges the arms 40 to move toward their full bale position shown in full line in Fig. 1 whereby the fluid pressure in the cylinder unit 46 is increased. This causes the roll bale to be compacted to a desired density. When the fluid pressure in the cylinder unit 46 reaches a preselected level, the control valve 60 opens to allow fluid passage from the cylinder unit 46 through the conduit 58 into the reservoir 56. The density of the roll bale is thereby controlled during its formation by a substantially uniform compressive force. When a full bale B has been completed, the tailgate 14 is raised to discharge the bale B, and then the arms 40 return to their bale starting position, due to gravity, as the tailgate 14 is subsequently lowered. This movement of the arms 40 from their full bale position to their bale starting position causes extension of the cylinder unit 46 which creates a vacuum in the cylinder unit 46 and thereby results in the flow of hydraulic fluid from the reservoir 56 into the cylinder unit 46 via the check valve 62 and the conduits 64, 58. To avoid damage to the machine as a result of the arms 40 with the rollers 44a-44f thereon falling too abruptly to the bale starting position upon the raising of the tailgate 14 and the discharge of a completed bale B, a restrictor may be included in the conduit 64 to restrict the flow of pressure fluid from the reservoir 56 into the cylinder unit 46 whereby the movement of the arms 40 with the rollers 44a-44f thereon from the full bale position to the bale starting position is damped.

The control valve 60 may be Model No. 0-532-003-001 manufactured by Robert Bosch Corporation. This particular valve is infinitely adjustable over a range of 15 kg/cm$^2$ to 150 kg/cm$^2$.

Another important feature of the bale density control system of the present invention is that it is self-contained and thus does not require connection to a remote system such as a tractor hydraulic system. In other words, this bale density control system does not require a power source, be it external or internal.

It will be understood that changes to the details, materials, steps and arrangements of parts which have been described and illustrated to explain the nature of this invention will occur to and may be made by those skilled in the art upon a reading of this disclosure within the principles and scope of the invention. The foregoing description illustrates one embodiment of the invention; however, concepts, as based upon the description may be employed in other embodiments without departing from the scope of the invention.

It will be understood that the bale density control system of the present invention may also be used on a round baler where conveyor belts instead of rollers constitute the conveying members of the bale forming mechanism. This general type of round baler is disclosed in US-A-4.119.026. Consequently, in the round baler 1 shown herein in Fig. 1, each of the sets of rollers 36a-36f, 38a-38b and 44a-44f may be replaced by one or more conveyor belts.

Alternatively the density control mechanism according to the invention also may be used in combination with other round balers having bale forming conveyor means, such as belts or apron chains, which are carried only in part by the arms described hereabove with reference to the parts 40 of the arrangement according to Figure 1; said bale forming conveyor means further additionally also being supported on the frame of the round baler.

Also, the single cylinder unit 46 as shown in Figure 1 may be replaced by a pair of transversely spaced apart cylinder units each one of which extends between an anchorage point on the auxiliary frame portion or tailgate 14 and a coupling point on a corresponding arm 40. Said cylinder units hydraulically are coupled in parallel relative to each other and both may be of the single acting type. Both of said cylinders are in pressure fluid communication via said control valve 60 and the one way check valve 62 with the reservoir 56 in the manner as already described herebefore.

According to a further embodiment of the present invention the hydraulic cylinder means 46 (one or two) also may be of the double acting type with the plunger and plunger rod sides thereof being short-circuited and being coupled via said control valve 60 and said one way check valve 62, in the manner as already described, to the reservoir 56. The arrangement again may be such that when the arms 40 are moved from the bale starting position to the full bale position the hydraulic cylinder means 46 are contracted and vice versa. In this arrangement, movement of the arms 40 from the bale starting position toward the full bale position (and which thus causes contraction of the hydraulic cylinder means 46 as has already been said) results in a pressure fluid flow from the plunger side of the hydraulic cylinder means 46 to both the plunger rod side of said cylinder means 46 on the one hand and the reservoir 56 via the control valve 60 on the other hand when the fluid pressure in said hydraulic cylinder means 46 reaches said preselected level. The valve 60 thus again is mounted relative to the hydraulic cylinder means 46 in a manner so as to permit a fluid flow therethrough only in the direction from the plunger side of the cylinder means 46 toward the reservoir 56. This arrangement has the additional advantage that the reservoir 56 may be smaller when compared with the reservoir 56 of the arrangement according to Figure 2 to the extent that a portion of the pressure fluid which is drained from the plunger side of the cylinder means 46 upon contraction thereof, is stored in the plunger rod side of said cylinder means 46 rather than in the reservoir 56. Movement of the arms 40 from the full bale position toward the bale starting position (which thus causes extension of the cylinder means 46) results in a fluid flow from both the plunger rod side of the cylinder means 46 on the one hand and the reservoir 56 via the one way check valve 62 on the other hand into the plunger side of the cylinder means 46. The one way check valve 62 again is positioned parallel to the control valve 60 and permits a flow of pressure fluid in the opposite direction, i.e. in the direction from the reservoir 56 to the cylinder means 46.

According to still a further alternative embodiment of the present invention, the hydraulic cylinder means 46, which again are of the double acting type, are mounted between the tailgate 14 and the arms 40 in a manner so that said cylinder means 46 extend when the arms 40 move from the bale starting position toward the full bale position and vice versa. In this arrangement the control valve 60 and the one way check valve 62 extending parallel therewith, are coupled in fluid communication between the plunger rod side of the hydraulic cylinder means 46 and the reservoir 56 in a manner so that fluid flow from said plunger rod side of the cylinder means 46 is possible only via the control valve 60 and on condition that the fluid pressure in said plunger rod side of the cylinder means reaches said preselected level. Fluid flow into the plunger rod side of the cylinder means 46 is possible only via the one way check valve 62. In this arrangement the plunger side of the cylinder means 46 further also is coupled directly to the reservoir 56, i.e. without the interposition of any flow restricting elements such as the aforementioned control valve 60 and the one way check valve 62. In other words, there is no direct communication, in this arrangement between the plunger and plunger rod sides of the cylinder means 46 to the extent that the aforementioned control valve 60 and the one way check valve 62 are included in the conduits therebetween.

In operation of this further alternative embodiment of the invention and when the arms 40 are moved from the bale starting position toward the full bale position (which, as already said, causes the extension of the cylinder means 46), pressure fluid is caused to flow from the plunger rod side of the cylinder means 46 via the control valve 60 on the one hand and from the reservoir 56 on the other hand to the plunger side of said cylinder means 46 when the fluid pressure in the plunger rod side of the cylinder means 46 reaches said preselected value. Conversely, when the arms 40 are moved from the full bale position toward the bale starting position, (which causes the contraction of the cylinder means 46), pressure fluid is caused to flow from the plunger side of the cylinder means 46 to both the reservoir 56 on the one hand and the plunger rod side of said hydraulic cylinder means 46 via the one way check valve 62 on the other hand. Similarly as the previous embodiment of the present invention, this embodiment also has the additional advantage that the reservoir 56 may be smaller than in the arrangement according to Figure 2. The reasons therefore are the same.

The following claims are intended to cover all modifications and variations of the various embodiments of the invention disclosed herein.

## Claims

1. A round baler (1) including a frame (2), arm means (40) mounted on the frame (2) and operatively supporting bale forming conveyor means (44a-44f); said arm means (40), in operation, being movable in an outward direction from a bale starting position to a full bale position by a roll bale being formed in the baler (1), and a system for controlling the density of the roll bales formed in the baler (1); said bale density control system comprising:

hydraulic cylinder means (46) connected between the frame (2) and the arm means (40) in a manner so that movement of the arm means (40) in said outward direction results in pressure fluid draining from the hydraulic cylinder means (46) at one side of the plunger means thereof, and

control means associated with the hydraulic cylinder means (46) and including a control valve (60) in pressure fluid communication with said one side of the hydraulic cylinder means (46); the arrangement being such that pressure fluid is permitted to drain from said one side of the hydraulic cylinder means (46) only when the pressure therein reaches a preselected level whereby, during bale formation, the movement of the arm means (40) in said outward direction is restrained to thereby induce desired density into a bale being formed in the baler (1), and

characterized in that:

the bale density control system is self-contained and further also comprises:

a reservoir (56) for containing hydraulic pressure fluid; said reservoir (56) being mounted on the frame (2) and connected via said control valve (60) to said one side of the hydraulic cylinder means (46); and

a one way check valve (62) mounted in parallel with the control valve (60) in a manner to permit pressure fluid flow from the reservoir (56) to said one side of the hydraulic cylinder means (46), the arrangement being such that, upon the discharge of a completed bale from the baler (1), the arm means (40) are permitted to return from said full bale position to said bale starting position under influence of gravity forces acting thereupon.

2. A round baler according to claim 1, characterized in that the control valve (60) is adjustable to allow adjustment of said preselected level of the pressure in said one side of the hydraulic cylinder means (46) at which said pressure fluid drainage from said one side of the hydraulic cylinder means (46) is permitted.

3. A round baler according to claim 2, characterized in that the control valve (60) is in the form of an adjustable relief valve disposed to permit said pressure fluid drainage from said one side of the hydraulic cylinder means (46) when the pressure therein reaches said preselected level.

4. A round baler according to any of the claims 1 to 3 characterized in that: ·

said baler also comprises an auxiliary frame portion (14) pivotally mounted on a base frame portion (12) for movement between a lowermost bale forming position and a raised bale discharge position, and

said arm means (40) are pivotally mounted on said auxiliary frame portion (14) for movement between said bale starting position and said full bale position in a manner so that, when, upon completion of a roll bale, the auxiliary frame portion (14) is pivoted towards its raised bale discharge position, said arm means (40) are subjected to said gravity forces tending to pivot these arm means (40) towards said bale starting position.

5. A round baler according to any of the claims 1 to 4 characterized in that flow restrictor means are provided in series with the one way check valve (62) and in parallel with the control valve (60).

6. A round baler according to either claim 4 or claim 5 when appended to claim 4, wherein the auxiliary frame portion (14) comprises a transverse beam (48) and the arm means (40) comprise a pair of transversely spaced apart, generally parallel arms pivotally mounted on the auxiliary frame portion (14) adjacent one of their ends and carrying therebetween the conveying means (44a-44f); said arms being coupled to each other by a further transverse beam (50) at a distance from the pivotal mounting thereof; and

characterized in that

the hydraulic cylinder means (46) comprise a single cylinder unit extending between said beam (48) on the auxiliary frame portion (14) and the further beam (50) interconnecting said arms; said hydraulic cylinder unit being coupled to said beam (48) and further beam (50) generally at the middle of the transverse dimensions thereof.

7. A round baler according to either claim 4 or claim 5 when appended to claim 4 wherein the arm means (40) comprise a pair of transversely spaced apart, generally parallel arms pivotally mounted on the auxiliary frame portion (14) adjacent one of their ends and carrying therebetween the conveying means (44a-44f) and

characterized in that

the hydraulic cylinder means (46) comprise a pair of transversely spaced apart cylinder units, each one of which extends between an anchorage point on the auxiliary frame portion (14) and a coupling point on a corresponding one of said arms; said pair of hydraulic cylinder units hydraulically being coupled in parallel relative to each other.

8. A round baler according to claim 6 or 7 characterized in that:

the hydraulic cylinder means (46) are of the single acting type with said one side thereof, which is in pressure fluid communication with the control valve (60) and the one way check valve (62), being positioned below the plunger means thereof; the arrangement being such that:

movement of the arm means (40) from the bale starting position towards the full bale position causes contraction of the hydraulic cylinder means (46) which results in a pressure fluid flow from said hydraulic cylinder means (46) to said reservoir (56) via said control valve (60) when the fluid pressure in said hydraulic cylinder means (46) reaches said preselected level; and

movement of the arm means (40) from the full bale position towards the bale starting position causes extension of the hydraulic cylinder means (46) which results in a fluid flow from said reservoir (56) into said hydraulic cylinder means (46) via said one way check valve (62).

9. A round baler according to claim 6 or 7 characterized in that:

the hydraulic cylinder means (46) are of the double acting type with the plunger and the plunger rod sides thereof being short-circuited and being coupled via said control valve (60) and said one way check valve (62) to said reservoir (56); the arrangement being such that:

movement of the arm means (40) from the bale starting position towards the full bale position causes contraction of the hydraulic cylinder means (46) which results in a pressure fluid flow from the plunger side of said hydraulic cylinder means (46) to both the plunger rod side of said hydraulic cylinder means (46) on the one hand and said reservoir (56) via said control valve (60) on the other hand when the fluid pressure in said hydraulic cylinder means (46) reaches said preselected level; and

movement of the arm means (40) from the full bale position towards the bale starting position causes extension of the hydraulic cylinder means (46) which results in a pressure fluid flow from both the plunger rod side of the hydraulic cylinder means (46) on the one hand and the reservoir (56) via said one way check valve (62) on the other hand into the plunger side of said hydraulic cylinder means (46).

10. A round baler according to claim 6 or 7 characterized in that:

the hydraulic cylinder means (46) are of the double acting type with said one side thereof, which is in pressure fluid communication with the control valve (60) and the one way check valve (62), being positioned at the plunger rod side of said cylinder means (46) and with the plunger side of said cylinder means (46) being in direct fluid communication with said reservoir (56); the arrangement being such that:

movement of the arm means (40) from the bale starting position towards the full bale position causes extension of the hydraulic cylinder means (46) which results in a pressure fluid flow from the plunger rod side of the hydraulic cylinder means (46) via the control valve (60) on the one hand and from the reservoir (56) on the other hand to the plunger side of said hydraulic cylinder means (46) when the fluid pressure in the plunger rod side of said hydraulic cylinder means (46) reaches said preselected level; and

movement of the arm means (40) from the full bale position towards the bale starting position causes contraction of the hydraulic cylinder means (46) which results in a pressure fluid flow from the plunger side of the hydraulic cylinder means (46) to both the reservoir (56) on the one hand and the plunger rod side of said hydraulic cylinder means (46) via said one-way check valve (62) on the other hand.

**Patentansprüche**

1. Ballenpresse (1), die einen Rahmen (2), an dem Rahmen (2) befestigte Armteile (40), die betriebsmäßig Ballenformungs-Fördereinrichtungen (44a-44f) haltern und im Betrieb ausgehend von einer Ballenanfangsposition in einer nach außen gerichteten Richtung auf eine einem fertigen Ballen entsprechende Position dadurch bewegbar sind, daß ein Ballen in der Ballenpresse (1) geformt wird, und ein System zur Steuerung der Dichte der in der Ballenpresse (1) geformten Rundballen einschließt, wobei das Ballendichte-Steuersystem folgende Teile umfaßt:

Hydraulikzylindereinrichtungen (46), die zwischen dem Rahmen (2) und den Armteilen (40) derart angeschlossen sind, daß eine Bewegung der Armteile (40) in der nach außen gerichteten Richtung dazu führt, daß Druckströmungsmittel aus den Hydraulikzylindereinrichtungen (46) an einer Seite von deren Kolben ausströmt, und

Steuereinrichtungen, die den Hydraulikzylindereinrichtungen (46) zugeordnet sind und ein Steuerventil (60) einschließen, das in Druckströmungsmittel-Verbindung mit der einen Seite der Hydraulikzylindereinrichtungen (46) steht, wobei die Anordnung derart ist, daß Druckströmungsmittel lediglich dann von der einen Seite der Hydraulikzylindereinrichtungen (46) ausströmen kann, wenn der Druck in diesen einen vorausgewählten Wert erreicht, so daß während der Rundballenbildung die Bewegung der Armteile (40) in der nach außen gerichteten Errichtung gehemmt wird, um auf diese Weise die gewünschte Dichte in einem in der Ballenpresse (1) geformten Ballen hervorzurufen,

dadurch gekennzeichnet, daß

das Ballendichte-Steuersystem in sich abgeschlossen ist und weiterhin folgende Teile umfaßt:

einen Behälter (56) zur Aufnahme von Druckströmungsmittel, wobei der Behälter (56) auf dem Rahmen (2) befestigt ist und über das Steuerventil (60) mit der einen Seite der Hydraulikzylindereinrichtungen (46) verbunden ist, und

ein Einweg-Rückschlagventil (62), das parallel zu dem Steuerventil (60) derart befestigt ist, daß Druckströmungsmittel von dem Behälter (56) zu der einen Seite der Hydraulikzylindereinrichtungen (46) strömen kann, wobei die Anordnung derart ist, daß beim Auswerfen eines fertigen Ballens aus der Ballenpresse (1) die Armteile (40) von der dem fertigen Ballen entsprechenden Position in die Ballenanfangsposition unter dem Einfluß von auf die Armteile wirkenden Schwerkräften zurückkehren können.

2. Rundballenpresse nach Anspruch 1, dadurch gekennzeichnet, daß das Steuerventil (60) einstellbar ist, um eine Einstellung des vorausgewählten Wertes des Druckes in der einen Seite der Hydraulikzylindereinrichtungen (46) zu ermöglichen, bei dem das Ausströmen des Druckströmungsmittels aus der einen Seite der Hydraulikzylindereinrichtungen (46) ermöglicht wird.

3. Rundballenpresse nach Anspruch 2, dadurch gekennzeichnet, daß das Steuerventil (60) die Form eines einstellbaren Entlastungsventils aufweist, das derart angeordnet ist, daß das Ausströmen von Druckströmungsmittel von der einen Seite der Hydraulikzylindereinrichtungen (46) ermöglicht wird, wenn der Druck in diesen den vorausgewählten Wert erreicht.

4. Rundballenpresse nach einem der Ansprüche 1 bis 3, dadurch gekennzeichnet, daß:

die Ballenpresse weiterhin einen Hilfsrahmenteil (14) umfaßt, der schwenkbar auf dem Grundrahmenteil (12) für eine Bewegung zwischen einer untersten Ballenformungsposition und einer angehobenen Ballenauswurfposition befestigt ist, und

die Armteile (40) schwenkbar auf dem Hilfsrahmenteil (14) für eine Bewegung zwischen der Ballenanfangsposition und der dem fertigen Ballen entsprechenden Position derart befestigt sind, daß wenn bei der Fertigstellung eines Rundballens der Hilfsrahmen (14) in Richtung auf seine angehobene Ballenauswurfposition verschwenkt wird, die Armteile (40) den Schwerkräften unterworfen sind, die bestrebt sind, diese Armteile (40) in die Ballenanfangsposition zu verschwenken.

5. Rundballenpresse nach einem der Ansprüche 1 bis 4, dadurch gekennzeichnet, daß Strömungsdrosseleinrichtungen in Serie mit dem Einweg-Rückschlagventil (62) und parallel zu dem Steuerventil (60) vorgesehen sind.

6. Rundballenpresse nach einem der Ansprüche 4 oder 5 unter Rückbeziehung auf Anspruch 4, worin der Hilfsrahmenteil (14) einen Querträger (48) umfaßt und die Armteile (40) zwei mit Querabstand angeordnete, allgemein parallele Arme umfassen, die schwenkbar auf dem Hilfsrahmenteil (14) benachbart zu einem ihrer Enden befestigt sind und zwischen sich die Fördereinrichtungen (44a-44f) tragen, wobei die Arme miteinander durch einen weiteren Querträger (50) in einer Entfernung von ihrer Schwenkbefestigung verbunden sind, dadurch gekennzeichnet, daß die Hydraulikzylindereinrichtungen (46) eine einzige Zylindereinheit umfassen, die sich zwischen dem Träger (48) auf dem Hilfsrahmenteil (14) und dem weiteren Träger (50) erstreckt, der die Arme miteinander verbindet, wobei die Hydraulikzylindereinheit mit dem Träger (48) und dem weiteren Träger (50) allgemein an der Mitte von deren Querabmessungen verbunden ist.

7. Rundballenpresse nach Anspruch 4 oder 5 unter Rückbeziehung auf Anspruch 4, worin die Armteile (40) zwei mit Querabstand angeordnete allgemein parallele Arme umfassen, die schwenkbar an dem Hilfsrahmenteil (14) benachbart zu einem ihrer Enden befestigt sind und zwischen sich die Fördereinrichtungen (44a-44f) tragen, dadurch gekennzeichnet, daß die Hydraulikzylindereinrichtungen (46) zwei mit Querabstand angeordnete Zylindereinheiten umfassen, von denen sich jede zwischen einem Verankerungspunkt an dem Hilfsrahmenteil (14) und einem Kupplungspunkt an einem entsprechenden der Arme erstreckt, wobei die beiden Hydraulikzylindereinheiten hydraulisch parallel zueinander angeschlossen sind.

8. Rundballenpresse nach Anspruch 6 oder 7, dadurch gekennzeichnet, daß

die Hydraulikzylindereinrichtungen (46) vom einfachwertenden Typ sind, wobei ihre eine Seite, die in Druckströmungsmittel-Verbindung mit dem Steuerventil (60) und dem Einweg-Rückschlagventil (62) steht, unterhalb der Kolbenteile der Hydraulikzylindereinrichtungen angeordnet net ist, wobei die Anordnung derart ist, daß:

eine Bewegung der Armteile (40) von der Ballenanfangsposition in Richtung auf die einem fertigen Ballen entsprechende Position eine Zusammenziehung der Hydraulikzylindereinrichtungen (46) hervorruft, was zu einer Druckströmungsmittel-Strömung von den Hydraulikzylindereinrichtungen (46) zu dem Behälter (56) über das Steuerventil (60) führt, wenn der Strömungsmitteldruck in den Hydraulikzylindereinrichtungen (46) den vorausgewählten Wert erreicht, und

die Bewegung der Armteile (40) von der einem fertigen Ballen entsprechenden Position in die Ballenanfangsposition eine Ausdehnung der Hydraulikzylindereinrichtungen (46) hervorruft, was zu einer Druckströmungsmittel-Strömung von dem Behälter (56) in die Hydraulikzylindereinrichtungen (46) über das Einweg-Rückschlagventil (62) führt.

9. Rundballenpresse nach Anspruch 6 oder 7, dadurch gekennzeichnet, daß

die Hydraulikzylindereinrichtungen (46) vom doppelwirkenden Typ sind, wobei ihre Kolben- und Kolbenstangenseiten kurzgeschlossen sind und über das Steuerventil 60) und das Einweg-Rückschlagventil (62) mit dem Behälter (56) gekoppelt sind und wobei die Anordnung derart ist, daß:

eine Bewegung der Armteile (40) von der Ballenanfangsposition in die einem fertigen Ballen entsprechende Position ein Zusammenziehen der Hydraulikzylindereinrichtungen (46) hervorruft, was zu einer Druckströmungsmittel-Strömung von der Kolbenseite der Hydraulikzylindereinrichtungen (46) sowohl zur Kolbenstangenseite der Hydraulikzylindereinrichtungen (46) einerseits als auch zum Behälter (56) über das Steuerventil (60) andererseits führt, wenn der Strömungsmitteldruck in den Hydraulikzylindereinrichtungen (46) den vorausgewählten Wert erreicht und

eine Bewegung der Armteile von der einem fertigen Ballen entsprechenden Position in Richtung auf die Ballenanfangsposition ein Ausfahren der Hydraulikzylindereinrichtungen (46) hervorruft, was zu einer Druckströmungsmittel-Strömung sowohl von der Kolbenstangenseite der Hydraulikzylinder (46) einerseits und von dem Behälter (56) über das Einweg-Rückschlagventil (62) andererseits zur Kolbenseite der Hydraulikzylindereinrichtungen (46) führt.

10. Rundballenpresse nach Anspruch 6 oder 7, dadurch gekennzeichnet, daß:

die Hydraulikzylindereinrichtungen (46) vom doppelwirkenden Typ sind, wobei ihre eine Seite, die in Druckströmungsmittel-Verbindung mit dem Steuerventil (60) und dem Einweg-Rückschlagventil (62) steht, auf der Kolbenstangenseite der Zylindereinrichtungen (46) liegt, und wobei die Kolbenseite der Zylindereineinrichtungen (46) in direkter Strömungsmittelverbindung mit dem Behälter (56) steht, wobei die Anordnung derart ist, daß:

eine Bewegung der Armteile (40) von der Ballenanfangsposition in Richtung auf die einem fertigen Ballen entsprechende Position ein Ausfahren der Hydraulikzylindereinrichtungen (46) hervorruft, was zu einer Druckströmungsmittel-Strömung von der Kolbenstangenseite der Hydraulikzylindereinrichtungen (46) über das Steuerventil (60) einerseits und von dem Behälter (56) andererseits zur Kolbenseite der Hydraulikzylindereinrichtungen (46) führt, wenn der Strömungsmitteldruck in der Kolbenstangenseite der Hydraulikzylindereinrichtungen (46) den vorausgewählten Wert erreicht und

eine Bewegung der Armteile (40) von der einem fertigen Ballen entsprechenden Position in Richtung auf die Ballenanfangsposition eine Zusammenziehung der Hydraulikzylindereinrichtung (46) hervorruft, was zu einer Druckströmungsmittel-Strömung von der Kolbenseite der Hydraulikzylindereinrichtungen (46) sowohl zu dem Behälter (56) einerseits und zur Kolbenstangenseite der Hydraulikzylindereinrichtungen (46) über das Einweg-Rückschlagventil (62) andererseits führt.

**Revendications**

1. Ramasseuse-presse à balles rondes (1) comportant un châssis (2), des moyens formant bras (40) montés sur le châssis (2) et supportant d'une manière fonctionnelle des moyens transporteurs de formage de balles (44a—44f); lesdits moyens formant bras (40) étant, en fonctionnement, aptes à être déplacés dans une direction orientée vers l'extérieur, depuis une position de commencement de balle jusqu'à une position de balle finie, par une balle cylindrique en train d'être formée dans le ramasseuse-presse (1), et un système pour contrôler la densité des balles cylindriques formées dans la ramasseuse-presse (1); ledit système de contrôle de densité de balles comportant:

des moyens formant vérin hydraulique (46) intercalés entre le châssis (2) et les moyens formant bras (40), de telle façon qu'un déplacement des moyens formant bras (40) dans ladite direction orientée vers l'extérieur se traduit par un écoulement de fluide sous pression à partir des moyens formant vérins hydrauliques (46), au niveau d'un côté des moyens formant pistons de ceux-ci, et

des moyens de contrôle associés auxdits moyens formant vérin hydraulique (46) et comportant une soupape de commande (60) en relation de communication de fluide sous pression avec ledit côté des moyens formant vérin hydraulique (46); l'agencement étant tel que du fluide sous pression peut s'écouler à partir dudit côté des moyens formant vérin hydraulique (46) uniquement lorsque la pression régnant dans ceux-ci atteint un niveau présélectionné, moyennant quoi, le déplacement des moyens formant bras (40) dans ladite direction orientée vers l'extérieur pendant la formation d'une balle, est limité pour ainsi impartir une densité voulue à la balle en train d'être formée dans la ramasseusepressue (1), et

caractérisée en ce que:

le système de contrôle de densité de balles est autonome et comporte également:

un réservoir (56) destiné à contenir du fluide sous pression hydraulique; ledit réservoir (56) étant monté sur le châssis (2) et relié par l'intermédiaire de ladite soupape de commande (60) audit côté des moyens formant vérin hydraulique (46); et

une soupape de retenue à une seule voie (62) montée en parallèle avec le soupape de commande (60) de manière à permettre un écoulement de fluide sous pression de réservoir (56) vers ledit côté des moyens formant vérin hydraulique (46), l'agencement étant tel que, lorsqu'une balle terminée est déchargée de la ramasseuse-presse (1), les moyens formant bras (40) peuvent revenir de ladite position de balle finie dans ladite position de commencement de balle sous l'effet de forces de gravité qui agissent sur eux.

2. Ramasseuse-presse à balles rondes selon la revendication 1, caractérisée en ce que la soupape de commande (60) est réglable pour permettre un réglage dudit niveau présélectionné de la pression dudit côté des moyens formant vérin hydraulique (46), auquel ledit écoulement de fluide sous pression à partir dudit côté des moyens formant vérin hydraulique (46) est permis.

3. Ramasseuse-presse à balles rondes selon la revendication 2, caractérisée en ce que la soupape de commande (60) se présente sous la forme d'une soupape de détente réglable conçue pour permettre ledit écoulement de fluide sous pression à partir dudit côté des moyens formant vérin hydraulique (46), lorsque la pression règnant dans ceux-ci atteint ledit niveau présélectionné.

4. Ramasseuse-presse à balles rondes selon l'une quelconque des revendications 1 à 3, caractérisée en ce que:

ladite ramasseuse-presse comporte également une partie formant châssis auxiliaire (14) montée pivotante sur une partie formant châssis de base (10) en vue de se déplacer entre une position extrême inférieure de formage de balle et une position relevée de déchargement de balle, et

lesdits moyens formant bras (40) sont montés pivotants sur ladite partie formant châssis auxiliaire (14) en vue de se déplacer entre ladite position de commencement de bale et ladite position de balle finie de telle façon que, lorsqu'au moment où une balle cylindrique est terminée, la partie formant châssis auxiliaire (14) est animée d'un mouvement de pivotement en direction de sa position relevée de déchargement de balle, lesdits moyens formant bras (40) sont soumis auxdites forces de gravité qui tendent à les faire pivoter en direction de ladite position de commencement de balle.

5. Ramasseuse-presse à balles rondes selon l'une quelconque des revendications 1 à 4, caractérisée en ce que des moyens rectricteurs d'écoulement sont montés en série avec la soupape de retenue à une seule voie (62) et en parallèle avec la soupape de commande (60).

6. Ramasseuse-presse à balles rondes selon la revendication 4 ou la revendication 5, lorsque celle-ci est dépendante de la revendication 4, dans laquelle la partie formant châssis auxiliaire (14) comporte une première poutre transversale (48), tandis que les moyens formant bras (40) comportant deux bras sensiblement parallèles, espacés l'un de l'autre transversalement qui sont montés pivotants, à proximité de l'une de leurs extrémités, sur la partie formant châssis auxiliaire (14) et qui portent entre eux les moyens transporteurs (44a—44f); lesdits bras étant accouplés l'un avec l'autre, à une certaine distance de leur montage pivotant, au moyen d'une seconde poutre transversale (50); et

caractérisé en ce que

les moyens formant vérin hydraulique (46) comportent un seul ensemble de vérin qui s'étend entre ladite première poutre (48) de la partie formant châssis auxiliaire (14) et la seconde poutre (50) qui relie entre eux lesdits bras; ledit ensemble de vérin hydraulique étant accouplé avec ladite première poutre (48) et ladite seconde poutre (50), d'une manière générale, au milieu des dimensions transversales de celles-ci.

7. Ramasseuse-presse à balles rondes selon la revendication 4 ou la revendication 5, lorsque celle-ci est dépendante de la revendication 4, dans laquelle les moyens formant bras (40) comportent deux bras sensiblement parallèles, espacés l'un de l'autre transversalement qui sont montés pivotants, à proximité de l'une de leurs extrémités, sur la partie formant châssis auxiliaire (14) et qui portent entre eux les moyens transporteurs (44a—44f); et

caractérisée en ce que

les moyens formant vérin hydraulique (46) comportent deux ensembles de vérins espacés l'un de l'autre transversalement dont chacun s'étend entre un point d'ancrage prévu sur la partie formant châssis auxiliaire (14) et un point d'accouplement situé sur celui desdits bras qui lui correspond; lesdits deux ensembles de vérins hydrauliques étant accouplés hydrauliquement en parallèle l'un par rapport à l'autre.

8. Ramasseuse-presse à balles rondes selon la revendication 6 ou 7, caractérisée en ce que:

les moyens formant vérin hydraulique (46) sont du type à simple effet, leurs dit côté en relation de communication de fluide sous pression avec la soupape de commande (60) et la soupape de retenue à une seule voie (62) étant positionné au-dessous de leurs moyens formant piston; l'agencement étant tel que:

le déplacement des moyens formant bras (40) de la position de commencement de balle vers la position de balle finie provoque une contraction des moyens formant vérin hydraulique (46), qui se traduit par un écoulement de fluide sous pression à partir desdits moyens formant vérin hydraulique (46) en direction dudit réservoir (56) par l'intermédiaire de ladite soupape de commande (60), lorsque la pression du fluide dans lesdits moyens formant vérin hydraulique (46) atteint ledit niveau présélectionnée; et

le déplacement des moyens formant bras (40) de la position de balle finie vers la position de commencement de balle provoque une extension des moyens formant vérin hydraulique (46), qui se traduit par un écoulement de fluide à partir dudit réservoir (56) dans lesdits moyens formant vérin hydraulique (46) par l'intermédiaire de ladite soupape de retenue à une seule voie (62).

9. Ramasseuse-presse à balles rondes selon la revendication 6 ou 7, caractérisée en ce que:

les moyens formant vérin hydraulique (46) sont du type à double effet, leurs côtés piston et tige de piston étant court-circuités et accouplés avec ledit réservoir (56) par l'intermédiaire de ladite soupape de commande (60) et de ladite soupape de retenue à une seule voie (62); l'agencement étant tel que:

le déplacement des moyens formant bras (40) de la position de commencement de balle vers la position de balle finie provoque une contraction des moyens formant vérin hydraulique (46), qui se traduit par un écoulement de fluide sous pression depuis le côté piston desdits moyens formant vérin hydraulique (46) vers, à la fois, le côté tige de piston de ces derniers, d'une part, et ledit réservoir (56) par l'intermédiaire de ladite soupape de commande (60), d'autre part, lorsque la pression du fluide dans lesdits moyens formant vérin hydraulique (46) atteint ledit niveau présélectionnée; et

le déplacement des moyens formant bras (40) de la position de balle finie vers la position de commencement de balle provoque une extension des moyens formant vérin hydraulique (46), qui se traduit par un écoulement de fluide sous pression depuis, à la fois, le côté tige de piston des moyens formant vérin hydraulique (46), d'une part, et le réservoir (56) par l'intermédiaire de ladite de retenue à une seule voie (62), d'autre part, dans le côté piston desdits moyens formant vérin hydraulique (46).

10. Ramasseuse-presse à balles rondes selon la revendication 6 ou 7, caractérisée en ce que:

les moyens formant vérin hydraulique (46) sont du type à double effet, leur dit côté en relation de communication de fluide sous pression avec la soupape de commande (60) et la soupape de retenue à une seule voie (62) étant positionée au niveau de leur côté tige de piston, tandis que leur côté piston est en communication fluidique directe avec ledit réservoir (56); l'agencement étant tel que:

le déplacement des moyens formant bras (40) de la position de commencement de balle vers la position de balle finie provoque une extension des moyens formant vérin hydraulique (46), qui se traduit par un écoulement de fluide sous pression depuis le côté tige de piston des moyens formant vérin hydraulique (46) par l'intermédiaire de la soupape de commande (60), d'une part, et depuis le réservoir (56), d'autre part, en direction du côté piston desdits moyens formant vérin hydraulique (46), lorsque la pression de fluide de côté tige de piston de ces derniers atteint ledit niveau présélectionnée; et

le déplacement des moyens formant bras (40) de la position de balle finie vers la position de commencement de balle provoque une contraction des moyens formant vérin hydraulique (46), qui se traduit par un écoulement de fluide sous pression depuis le côté piston des moyens formant vérin hydraulique (46) vers, à la fois, le réservoir (56), d'une part, et le côté tige de piston desdits moyens formant vérin hydraulique (46) par l'intermédiaire de ladite soupape de retenue à une seule voie (62), d'autre part.

EP 0 234 634 B1

Fig. 2

Fig. 1

1